# EUROPEAN PATENT APPLICATION

(11) **EP 0 924 594 A2**
(43) Date of publication of application: **23.06.1999**
(21) Application number: 98660144.1
(22) Date of filing: 17.12.1998
(51) Int. Cl.: G06F 3/023, H04M 1/72

(54) **Method and apparatus for entering text in a mobile station and a mobile station**

(30) Priority: 19.12.1997 FI 974576
(71) Applicant: NOKIA MOBILE PHONES LTD., 02150 Espoo (FI)
(72) Inventor: Wikberg, Harni, 00200 Helsinki (FI); Kiljander, Harri, Irving, TX 75038 (US)
(74) Representative: Brax, Matti Juhani

(57) **Abstract**

The invention relates to a method for entering text in a mobile station (16) provided with a keypad (18). According to the invention, a keypress activates a character among the characters available under said key, and the activated character is the most probably desired character to be entered on the basis of the previously entered characters. The character to be activated is looked up in a succession table calculated in advance. The succession table is either a two-dimensional digram succession table operated on the basis of one preceding character, or a three-dimensional trigram succession table operated on the basis of two preceding characters. The table is constructed on the basis of the statistic probability of character succession, and the probability order is different in different languages.

## Description

The invention relates to a method defined in the preamble of claim 1 for entering text in a mobile station and a mobile station defined in the preamble of claim 10.

In the prior art there are known methods for entering text in a mobile station by pressing the provided keys that are generally dedicated to two to four characters, such as letters or punctuation marks. In the state of the art, these characters are entered by pressing the respective key so many times that the desired character is selected. Moreover, there can generally be selected additional characters, if the keypresses are continued or lengthened. The characters are entered in the same order in which they are marked in the keys. After pressing a key, the obtained character can be changed for the duration of a given period. If the next character in succession is a character that is entered by some other key, the process is continued immediately by pressing said other key. If the user wants to repeat the same character or enter another character found from the same key, he must wait for the timeout to elapse or press a dedicated key, most advantageously the star ('*') key, in which case the previously pressed character is entered immediately, and the same key can be used for repetition or for entering a new character. The input of text with mobile station keys is standardised by ITU-T, The International Telecommunication Union - Telecommunication standardization sector.

There also is known a mobile station where, while the user is entering text, the logic system of the apparatus predicts the complete word in the course of writing. In order to achieve this, in the mobile station there is recorded, for each language, a glossary containing tens of thousands of words, and the begun word is compared with said glossary on the basis of the performed keypresses without knowing for sure which of the possible characters available from the respective keys the user has meant.

A drawback with known mobile stations is that the input of text is fairly difficult. Sometimes a key must be pressed even four times in order to enter the desired character. In between characters, it is often necessary to wait until the previous character is entered, or to press a dedicated key in order to kill the timeout.

Yet another drawback in devices that recognise complete words and use glossaries is the remarkably large quantity of memory required for realising the method and the high calculation rate of the processor, as well as the fact that the user does not always see the desired letters on the display, although it is fairly certain that the correct word is obtained by using this method. A particular problem connected to this method is the entering of foreign words in the text, because in that case, an incorrect word is often obtained.

The object of the invention is to eliminate the above mentioned drawbacks and to introduce a fluent text entering method and mobile station that both are easy to use.

The method according to the invention is characterised by what is stated in claim 1. The mobile station according to the invention is characterised by what is stated in claim 10. The preferred embodiments of the invention are explained in the dependent claims.

The invention relates to a method for entering text in a mobile station with a keypad where one or several keys are dedicated to several characters in which method a press on a key activates, among the characters found in said key, a character which is most probably desired character to be entered on basis of at least one previously entered character. According to the invention said character to be activated is looked up in a succession table constructed in advance. For the system, the previously entered characters are permanent, and only the new character is dealt with. The beginning of a sentence is considered as a space mark, wherefore this embodiment can be applied immediately at the beginning of a sentence.

In a preferred embodiment of the method, said succession table is constructed for a particular language.

In a preferred embodiment of the method, said succession table is constructed for a particular subject matter.

In another preferred embodiment of the method, the character to be activated is chosen on the basis of two preceding characters, when the first character is entered. The beginning of a sentence is considered as a space mark, wherefore this embodiment can be applied immediately after one entered character.

A succession table is for example a two-dimensional digram succession table operated on the basis of one preceding character, or a three-dimensional trigram succession table operated on the basis of two preceding characters. The succession table is constructed on the basis of the statistic probabilities of character succession, and the probability order is different with each language. Separate tables can also be constructed for entering names and messages, in which case there is achieved a higher prediction accuracy. The required tables are stored in a mobile station most advantageously according to the country in question and according to the user's mother tongue.

In a preferred embodiment of the method, unless the most probable activated character was here desired, the key is pressed again and there is activated the next character in the alphabetical order, or, if the last character was activated, there is then activated the first character of the alphabet that is found in said key.

In a preferred embodiment of the method, unless the most probable activated character was here desired, the key is pressed again and there is activated the character that is next in the probability order among the characters that are found in said key. When coming to the end of the probability order, the process is continued from the beginning.

In another preferred embodiment of the method, the next character available from the key is activated by pressing said key again. Accordingly, the entering of the character is expected for a given timeout, whereafter the next character can be put in.

In yet another preferred embodiment of the method, the next character found in a key can be activated by pressing a specific key dedicated to this purpose. For this purpose, there is most advantageously dedicated the Down Arrow key or the ALT or Alternative Function key. In this fashion, after selecting the desired character, the next character can be fed in immediately, so that the selected character is entered at once.

The character to be activated can be shown for the user on the display. Said character can be for example shown as blinking or weak, while it can still be replaced.

In yet another preferred embodiment of the method, the character to be activated is indicated for the user by sound. The mobile station produces the sound for instance by means of a sound synthesiser or by using recorded sound samples that describe the character to be activated. The sound can be realised as a speaking voice corresponding to the letter in question and as a sound signal corresponding to a character.

The invention also relates to a mobile station where text is entered. According to the invention, said mobile station comprises:
- a keypad, where one or several keys contain several different characters, for entering text,
- a processor for reading keypresses of the keypad and for selecting a most probable character on grounds of a succession table,
- a memory for recording a character and at least one succession table, and
- an indicator device for indicating characters.

In a preferred embodiment of the invention, the processor is used for looking up the most probable character from a succession table chosen for a particular operating situation from a group of two or more succession tables in the memory.

In a preferred embodiment of the invention, the indicating device includes a display for displaying the characters.

In another preferred embodiment of the invention, the indicating device includes an audio part for producing the sound that describes the characters.

It is an advantage of the invention that text input is made essentially easier, when the desired character is activated more rapidly. According to the invention, text can be written for instance in English with 40 % less keypresses than in the prior art applications.

Another advantage of the invention is that the method is less language-dependent than the glossary-based methods, in which case for example Scandinavian languages are from the point of view of the method nearly equal. Moreover, in the apparatus for realising the method, there is needed less memory and less processing capacity.

Yet another advantage of the invention is that from the point of view of the user, it is easy to learn how to use the method, because the changes brought about by this method in entering text are small.

The invention is explained in more detail below, with reference to the appended drawing, where
- figure 1: is a flowchart illustrating the steps of the method according to the invention,
- figure 2: is a block diagram illustrating the essential novel parts of the mobile station according to the invention,
- figure 3: illustrates a mobile station with the available characters written on the keys, and
- figure 4: illustrates how text is entered according to the method of the invention and according to a prior art method.

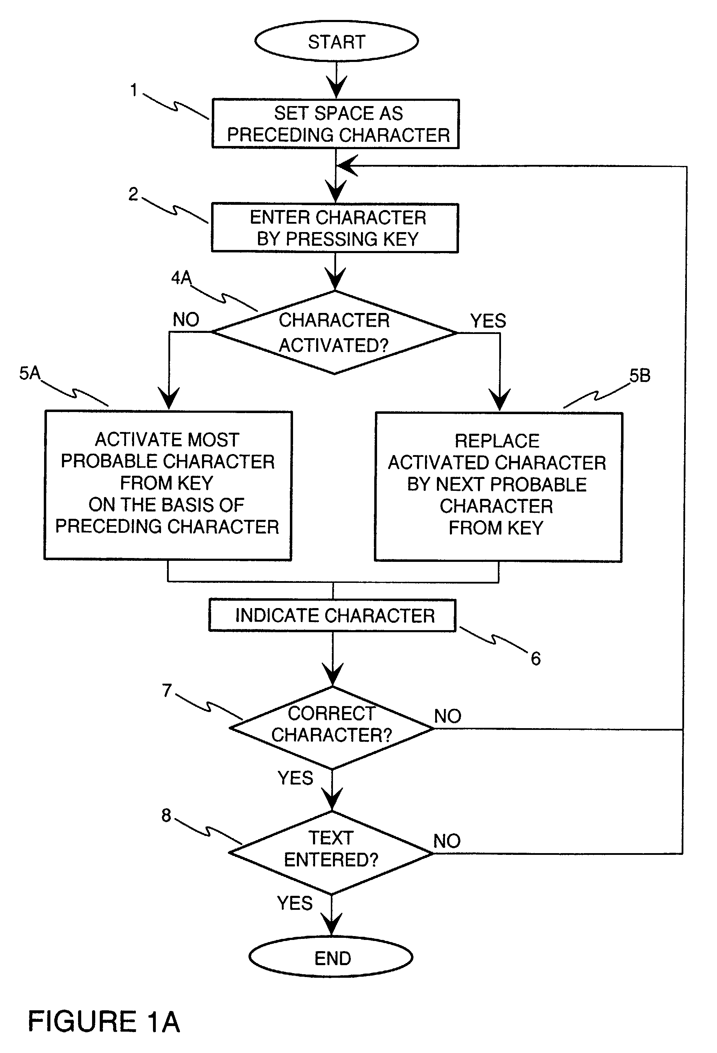

Figure 1a is a flowchart illustrating the steps of a method operating on the basis of one preceding character. First, step 1, the space mark is set as the preceding character. Then, step 2, there is entered the character by pressing the key containing the desired character. Next, step 4a, it is investigated whether a character was already activated by pressing said key. If a character was not activated, from the digram succession table there is activated, step 5a, on the basis of the preceding character, the most probable desired character found in said key. The character is indicated to the user, step 6, on display or by sound, and the user investigates, step 8, whether the activated character is correct; if not, he returns to step 2 to press the same key again, or to press a separate shift key. Now the character corresponding to the key is activated, step 4a, and there is thus activated, step 5b, instead of the already activated character, from the digram succession table the next most probably desired character found in this key. The character is indicated, step 6, to the user, and if, step 7, this character is correct, there is investigated, step 8, whether the text is completely entered, i.e. the user returns to step 2. Unless the next character is found in another key, the user must wait for a while before performing step 2. When the text is entered, step 8, the procedure is ended.

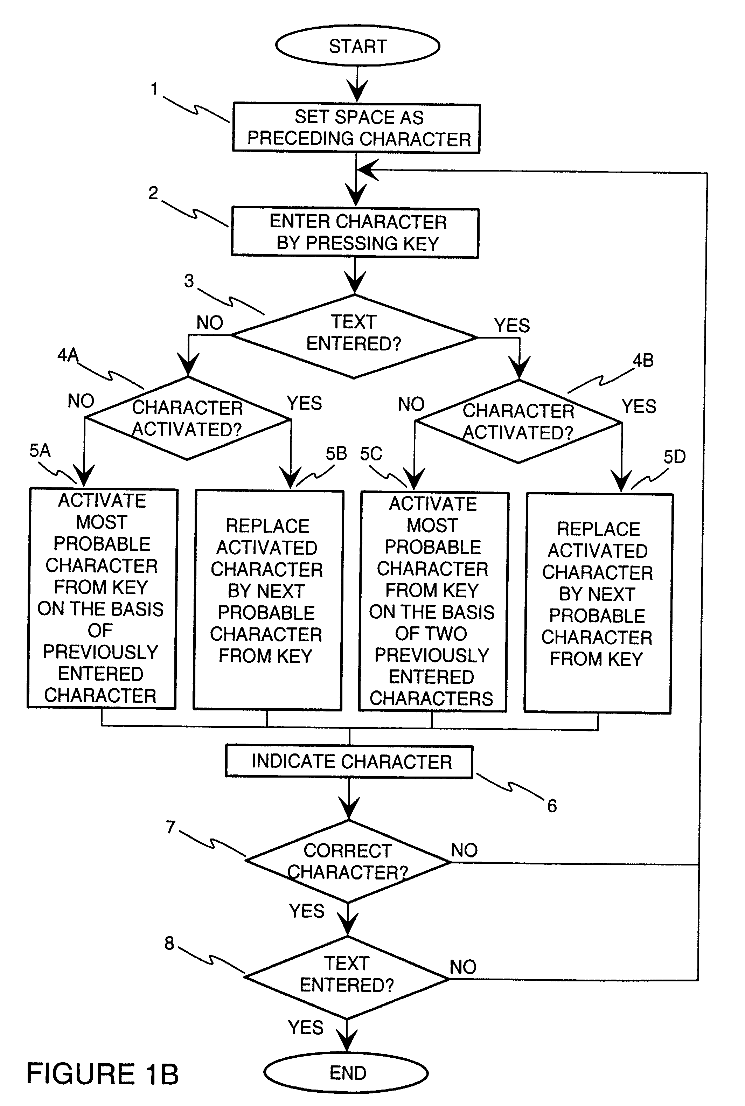

Figure 1b is a flowchart illustrating the steps of a method according to the invention that operates on the basis of alternatively one or two preceding characters. First there is set, step 1, the space mark as the previous character. Then there is entered, step 2, a character by pressing the key that contains the desired character, and investigated, step 3, whether any text was entered.

If there is no text entered so far, there is chosen the process branch operating on the basis of one preceding character, and it is investigated, step 4a, whether a character was already activated by pressing this key. If no character was activated, there is now activated, step 5a, on the basis of the preceding character, from the digram succession table the most probably desired character found in the key in question. The character is indicated, step 6, for the user, and the user investigates, step 7, whether the activated character is correct; if not, he returns to step 2 to press the same key again, or to press a separate shift key, and there is till no text entered, step 3. Now, however, a character corresponding to the key is activated, step 4a, and there is thus activated, step 5b, instead of the already activated character, from the digram succession table the next probably desired character found in the key in question. If, step 7, this character is correct, there is investigated, step 8, whether the text is completely entered; if not, step 2 is resumed.

Unless the next character is connected to a different key, the user must wait for a while before performing step 2. Now there is entered text, step 3, but a new character is not activated, step 4b, so that there is activated, step 5c, on the basis of the two preceding characters, from the trigram succession table, the most probably desired character found in the key in question. It is investigated, step 7, whether the activated character is correct; if not, step 2 is resumed and the same key is pressed again, or a separate shift key is pressed, and, because text is already entered, step 3, it is investigated whether a character corresponding to said key is activated, step 4b. Because a character is activated, there is activated, step 5d, instead of the already activated character, from the trigram succession table the next probably desired character found in this key. If the character is correct, step 7, it is investigated whether the text is completely entered, step 8.. If the text is not completely entered, the user returns to step 2. When the text is completely entered, step 8, he ends the procedure.

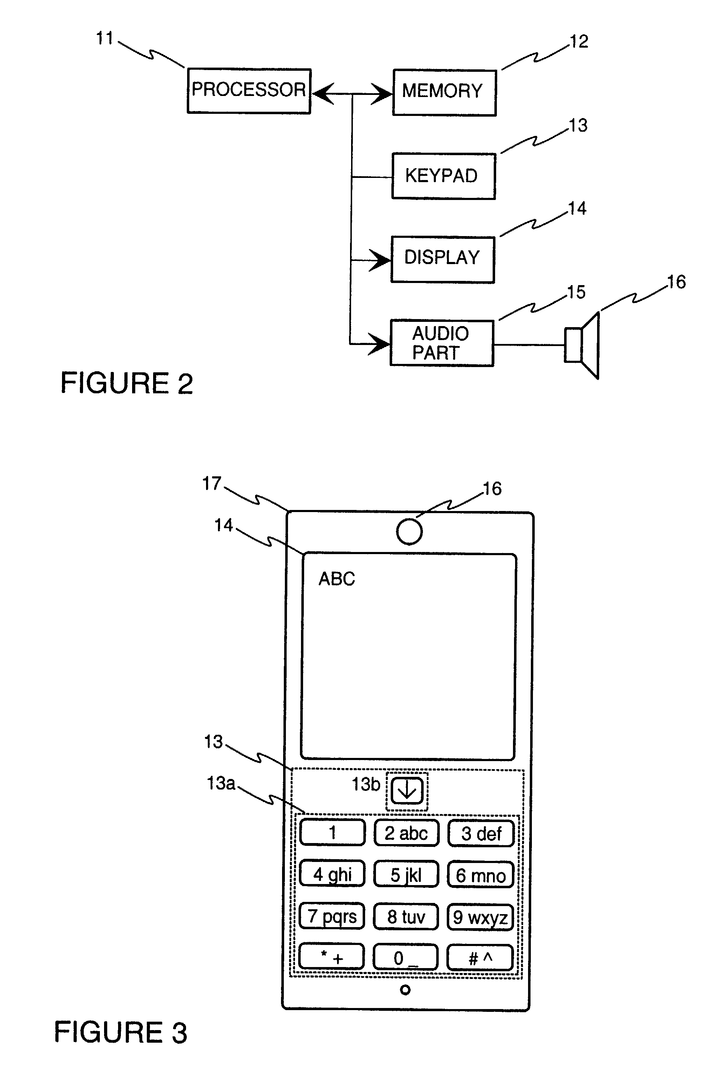

Figure 2 is a block diagram illustrating the essential novel parts of the mobile station according to the invention. The mobile station comprises a processor 11 for reading characters from the keypad 13 to the memory 12 and further to be displayed on the display 14. The entered characters are indicated, alternatively or additionally, by means of an electroacoustic transformer 16 of the audio part 15.

Figure 3 illustrates a mobile station with the available characters written on the keys. On the display 14 of the mobile station 17 there are shown the already entered characters and the characters to be entered. All characters and special characters that are available on the keypad 13 can be entered according to the invention, because when the probability is unclear, the whole set of characters can still be scrolled through by means of successive keypresses. As an alternative, instead of repeated keypresses, the characters connected to the keys 13a can be scrolled through by means of a shift key 13b. The mobile station 17 also includes an electroacoustic transformer 16 for listening to sound signals.

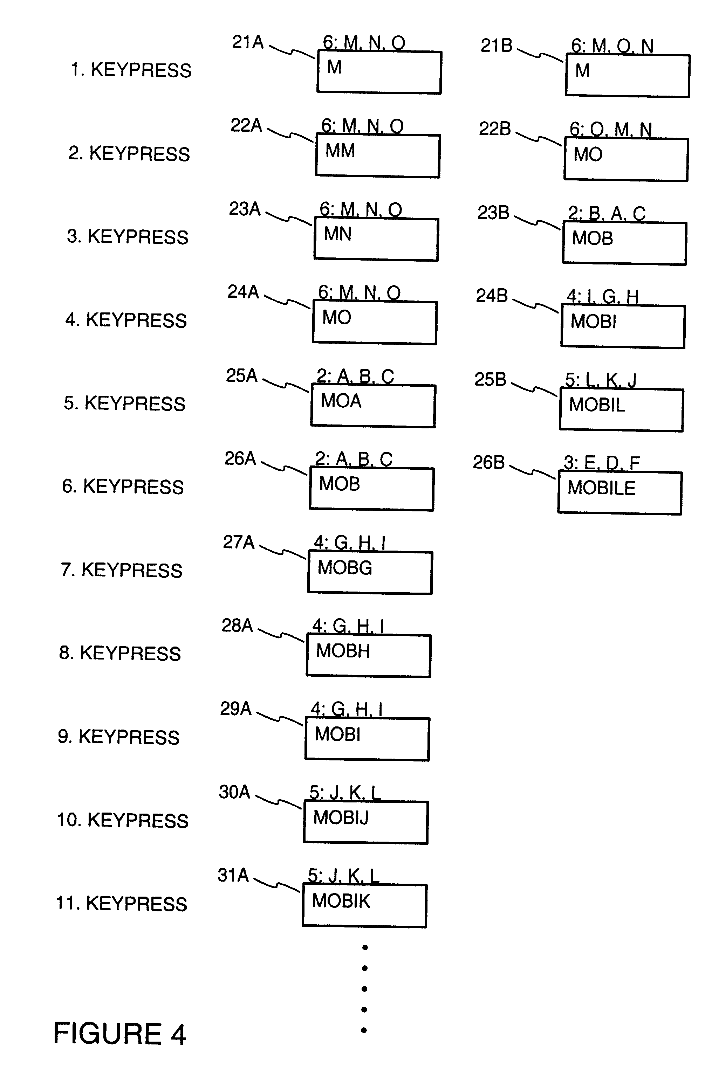

Figure 4 gives a parallel illustration of how the word MOBILE is entered both by means of the method of the invention and by means of the conventional method. In both methods, the first keypress of the key 6 enters the letter M, 21a, 21b. In the conventional system, the letters are in alphabetical order, but in this case it has no effect, because in both cases the word begins with the first letter provided in the key. In the method of the invention, the letters contained in the key are in the order M, O, N, which is the probability order of said letters as first letters. According to the conventional method, 22a, there is entered another letter M, because it comes first in the alphabet. Now it is still necessary to press the key two more times, 23a, 24a, in order to enter first the letter N and then the desired letter O. When performing the second keypress according to the method of the invention, 22b, the letters found in the key are now in the order O, M, N, which is their probability order after the letter M, and thus there is entered the letter O, which is the desired letter.

In the conventional method, it is often necessary to repeatedly press the same key, 25a, 27a, 28a, 30a, 31a, in order to be able to perform the keypress entering the desired letter, 26a, 29a. Thus there are needed 14 keypresses altogether for entering the word MOBILE. Figure 4 shows the keypresses up to 11.

Now the entering is continued so that according to the method of the invention, there are pressed successively, 23b, 24b, 25b, 26b, those keys to which the desired letters are connected. Thus the whole word MOBILE can be entered with only one keypress per each letter, i.e. six keypresses altogether.

Let us observe, by way of example, how the word TEST is entered in the method according to the invention. Writing is begun by pressing the number eight key once, which brings the letter T to the display 14, because it is the most probable first letter connected to this key. Let us then press the number three key once, which brings the letter E to the display, because it is the most probable letter succeeding the letter T that is found in said key. Next let us press the number seven key once, which brings the letter R to the display 14; it is not, however, the desired letter, wherefore the key is rapidly pressed again, so that the letter R is changed to S. When next pressing the number five key, on the display 14 there appears as the most probable successor the letter T, which is the last letter of the word. If the letter written on the display 14 is not desired, because the letter appearing next in the desired word is not statistically the most probable, as was the case when entering the letter S above, the key is pressed for a sufficient amount of times in order to enter the correct letter. As an exception to this rule, there can alternatively be applied a method where a letter is changed, when so desired, by means of a specific key; in that case, if the most probable letter is desired, the next letter found even in the same key can be chosen immediately after the preceding one.

As a second example, let us observe how the English word IS is entered when taking into account only one preceding letter when selecting the successor. After the user has entered the letter I, among the letters PQRS found in the number seven key, the most probable succeeding letter is S, with a probability of 0.605, the second most probable letter is R, with a probability of 0.34, the third probable letter is P with a probability of 0.052 and the least probable is Q, with a probability of 0.0025. Consequently, after the letter I, the letters found in the key 7 appear in the order SRPQ, but for instance after the letter A, they would appear in the order SPQR.

With an ordinary English text, there are obtained the following succession probabilities for the possibility that when pressing a key, the first entered letter is the desired one.

| Writing technique | Probability of correct character |
|---|---|
| Current ITU-T ("abc", "def", ...) | 32 % |
| Digram predicting | 75 % |
| Trigram predicting | 88 % |

With single keys containing three letters like keys 2 - 6 and 8, the probability that the prediction comes true is higher than with keys containing four letters, such as keys 7 and 9. The order of the letters possibly connected to the star key and the number one key is determined in the same fashion. The probable succession of the letters can be recorded by two bits per key, because a maximum number of four predictable letters is connected to each key. In the English language, where the alphabet includes 26 letters plus the space mark, the size obtained for a three-dimensional succession table becomes 27 * 27 * 27 * 2 bits, i.e. 39 366 bits, which in eight-bit bytes makes 4921 bits.

Most advantageously succession tables are constructed by studying the text in computers with analysis programs. The obtained table is then fed in a mobile station, where only little power is needed for processing it, because the table need not contain probability numbers, but only the probability orders, wherefore the size of the table in the memory of the mobile station is small. Below we shall now see a succession order table constructed for the English language.

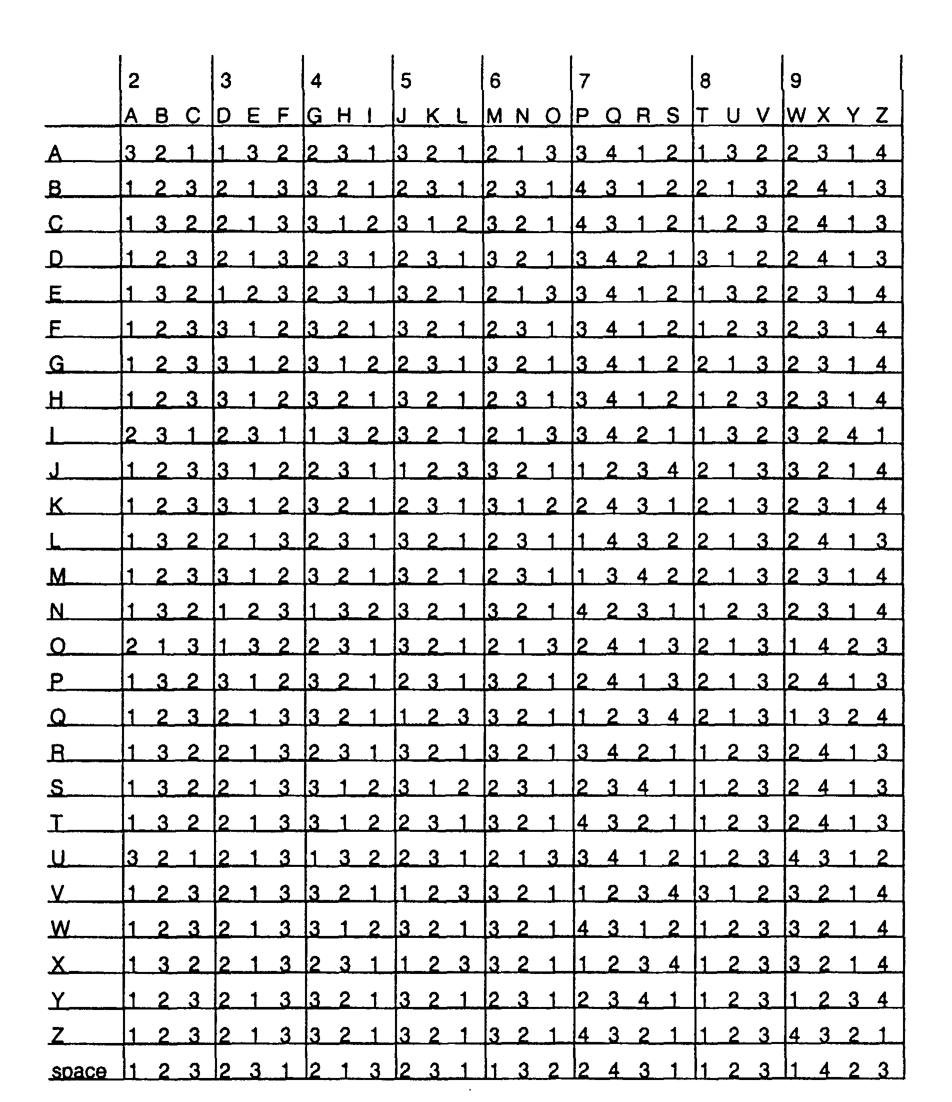

where on the topmost line, there are seen the keys 2 - 9 and the connected characters, and in the first column there are seen the previously entered letter and space characters. On the basis of the preceding entered character, there is chosen the line, and from the column of the key to be pressed next, there is seen the ordinal of probability of the letters found in the key in question.

Succession tables can also be used for several different purposes in different languages in one and the same mobile station, so that for different purposes, there can be selected tables of different languages. Even with the same language, it is possible to construct different tables for different purposes, so that the material to be used in the construction process is the glossary of said purpose, such as names.

The invention is not restricted to the above described preferred embodiments, but many modifications are possible within the scope of the inventional idea presented in the accompanying claims.

## Claims

1. A method for entering text in a mobile station provided with a keypad, where one or several keys are dedicated to several different characters, in which method a press on a key (2) activates (5a, 5b, 5c, 5d), among the characters found in said key, a character which is most probably desired character to be entered on basis of at least one previously entered character, **characterised** in that said character to be activated is looked up (5a, 5b, 5c, 5d) in a succession table constructed in advance.

2. A method according to claim 1, **characterised** in that said succession table is constructed for a particular language.

3. A method according to claim 1, **characterised** in that said succession table is constructed for a particular subject matter.

4. A method according to claim 1, **characterised** in that said character to be entered is selected (5c) on basis of two previously entered characters, when a first character is entered (3).

5. A method according to claim 1, **characterised** in that unless said activated, most probable character was desired here, when pressing said key again (2) there is activated a next character in an alphabetical order, or, when a last character is active, there is activated an alphabetically first character corresponding to said pressed key.

6. A method according to claim 1, **characterised** in that unless said activated most probable character was desired here, when pressing said key again (2), there is activated (5b, 5d) a character that is next in a probability order among the characters found in said pressed key.

7. A method according to claim 5 or 6, **characterised** in that said next character available from said key is activated by pressing (2, 13a) the same key again.

8. A method according to claim 5 or 6, **characterised** in that said next character connected to said key is activated by pressing (2, 13b) a specific key particularly dedicated for this purpose.

9. A method according to any of the preceding claims 1 - 8, **characterised** in that the character to be activated is indicated (6, 15, 16) for a user by means of sound.

10. A mobile station where text can be entered, **characterised** in that it comprises:
- a keypad (13), where one or several keys contain several different characters, for entering text,
- a processor (11) for reading keypresses of the keypad (13) and for selecting a most probable character on grounds of a succession table,
- a memory (12) for recording a character and at least one succession table, and
- an indicator device for indicating characters.

11. A mobile station according to claim 10, **characterised** in that the processor (11) is used for looking up the most probable character from a succession table chosen for a particular operating situation from a group of two or more succession tables in the memory (12).

12. A mobile station according to claim 10, **characterised** in that the indicator device comprises a display (14) for displaying characters.

13. A mobile station according to claim 10, **characterised** in that the indicator device comprises an audio part (15) for producing sound in order to describe characters.
